Europäisches Patentamt

(19) European Patent Office

Office européen des brevets

(11) Publication number: **0 238 312**
**B1**

(12) **EUROPEAN PATENT SPECIFICATION**

(45) Date of publication of the patent specification:
**28.11.90**

(21) Application number: **87302278.4**

(22) Date of filing: **17.03.87**

(51) Int. Cl.⁵: **F16L 37/12**

(54) **Connector for pressurised gas.**

(30) Priority: **17.03.86  GB 8606557**

(43) Date of publication of application:
**23.09.87 Bulletin 87/39**

(45) Publication of the grant of the patent:
**28.11.90 Bulletin 90/48**

(84) Designated Contracting States:
**AT BE CH DE ES FR GB GR IT LI LU NL SE**

(56) References cited:
**EP-A- 0 166 586**
**DE-A- 2 625 146**
**DE-A- 3 412 455**
**DE-A- 3 427 248**
**DE-A- 3 441 348**
**DE-B- 1 808 190**
**DE-C- 1 057 401**
**US-A- 3 297 064**

(73) Proprietor: **ISOWORTH LIMITED, 1210 Lincoln Road, Werrington Peterborough PE4 6ND(GB)**

(72) Inventor: **Scott, Alistair, 32 Mill Lane, Impington Cambridge CB4 4XN(GB)**
Inventor: **Clark, Peter Federick, 7 Orchard Lane, Woodnewton, Peterborough Cambridgeshire(GB)**

(74) Representative: **Beresford, Keith Denis Lewis et al, BERESFORD & Co. 2-5 Warwick Court High Holborn, London WC1R 5DJ(GB)**

## Description

This invention relates to carbonation apparatus and to a gas connector therefor for connecting the apparatus to a carbon dioxide supply vessel.

Conventional connectors of this type comprise a first part which is integral with a valve housing provided on the carbon dioxide supply vessel and which includes an axially displaceable valve operating member and a second part which comprises a portion of the carbonation apparatus and includes a gas conduit for receiving gas from the vessel, a sealing member forming a gas seal between the two parts and a plunger which may be actuated to effect movement of the valve operating member. The two parts are conventionally screw-threaded together. Known connectors suffer from the problem that proper operation of the valve is not assured. Further, the sealing surface of the vessel may be damaged in use, for example, by dropping, and as a result a proper seal is not achieved.

The invention aims to solve these problems.

In one aspect, the invention provides carbonation apparatus for use with a carbon dioxide supply vessel having a connector part which comprises a female member having an internal space defined by an internal cylindrical surface, a stop surface located within said female member, an inclined external locking surface, a passage which has a cross-section narrower than and which at one end communicates with the interior of the female member and a valve which normally closes said passage but which is openable to put the passage in communication with the interior of the vessel; the carbonation apparatus comprising:

a carbonation chamber;

a conduit for supplying carbon dioxide to said chamber; and

a further connector part for detachably interconnecting the carbonation apparatus with the connector part of the carbon dioxide supply vessel; said further connector part comprising a male member which has a hollow interior in communication with said conduit and which is adapted to be slidably inserted into the female member, the end of the male member being adapted to engage said stop surface to positively define the position of the male member relative to the female member when fully inserted therein; a sealing member on the outside of the male member and adapted to cooperate with said cylindrical surface of said female member to form a gas tight seal therewith; a valve actuator positioned in the hollow interior of the male member and adapted to be axially movable for opening the valve of the connector part of the vessel; resilient locking fingers positioned outwardly of the male member and projecting beyond the end thereof, each said finger having an inwardly directed projection adapted to engage said locking surface of said connector part of said vessel; and means for moving the locking fingers inwardly to a locking position and holding them in said locking position so that the engagement between the locking surface and the locking fingers may draw said male member into said female member and hold said male member in said defined position therein.

In another aspect, the invention provides a connector part for a carbon dioxide supply vessel for detachably connecting the vessel to a carbonation apparatus as defined in the preceding paragraph, said connector part comprising;

a female member having an internal space open at one end to receive the male member, said internal space being defined by an internal cylindrical surface adapted to cooperate with the sealing member on the male member to form a gas tight seal therewith;

an external locking surface which is adapted to be engaged by said inwardly directed projections of said locking fingers of said apparatus when said locking fingers are moved inwardly, said locking surface being inclined to face outwardly and away from said one end of said female member such that inward movement of said locking fingers draws said male member into said female member;

a stop located within said female member and adapted to cooperate with the end of the male member to form a positive stop which defines the position of the male member within the female member when said locking fingers are in their locking position;

a passage which has a cross-section narrower than and which at one end communicates with the interior of the female member; and a valve for closing said passage, said valve being normally closed and being openable by axial movement of said valve actuator to place the interior of the supply vessel in communication with said conduit via said passage and said male and female members.

The combination of the resilient locking fingers, inclined locking surface and positive stop ensures that the two connector parts can be draw tightly together to a position in which the location of the valve actuator is accurately defined relative to the valve so that proper operation of the valve is assured. The location of the sealing member on the exterior of the male member and the arrangement for this to cooperate with an internal cyclindrical surface of the female member ensures that inadequate sealing as a result of damage due to dropping the supply vessel is avoided.

Applicants acknowledge the disclosure of DE-B 1 808 190 (GB-A 1 214 029) in which a gas connector has an actuating rod for opening a valve of a gas bottle. However, a resilient seal provided in the connector engages the valve housing of the bottle to priovide "give" in the connection. It follows that precise positioning of the actuating rod relative to the valve does not take place. DE-A 2 625 146 (GB-A 1 512 317) is a further example of a prior art gas connector but in this device a valve is opened simply as a consequence of making the connection, there being no moveable valve actuator as utilized in the present invention. Applicant's own European application EP-A 166 586 illustrates a carbonation apparatus of the this to which the invention may be applied and this discloses a gas connector arrangement in Fig. 22. However, this is represented diagramatically and specific constructional details of the sealing arrangement are not discussed.

The invention is described further by way of example with reference to the accompanying drawings in which:

Figure 1 diagrammatically represents a carbonation apparatus in which the invention is embodied;

Figure 2 shows a two-part connector according to a preferred embodiment of the invention, partly in section, with the parts connected together;

Figure 3 shows the connector of Figure 2 with the two parts connected together but not locked;

Figure 4 shows the parts separated;

Figure 5 shows a part of the preferred embodiment of the invention in further section, to show more detail;

Figure 6 is a detail of part of the preferred embodiment; and

Figure 7 is a detail similar to Figure 6 but with the parts in a different position.

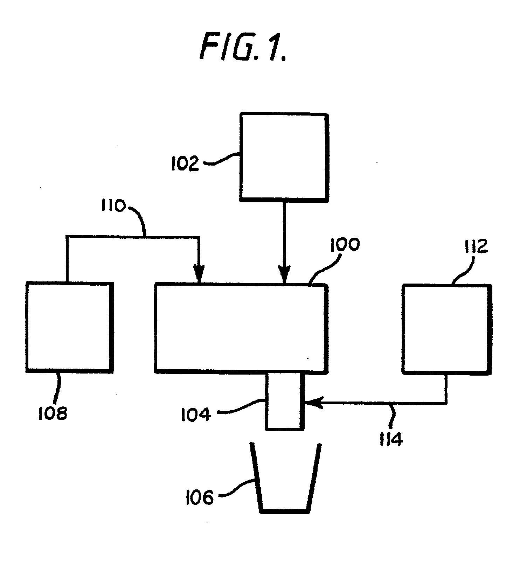

With reference to Figure 1, the carbonation apparatus, for home use, is adapted for carbonating relatively small quantities of water such as sufficient to form one or two drinks, and comprises a carbonation chamber 100 to which is connected a water supply means 102 for supplying water to be carbonated, and which has a discharge valve arrangement 104 for discharging carbonated water into a vessel such as a glass 106. A carbon dioxide supply means 108 is connected to the chamber 100 by a conduit 110 for supplying carbon dioxide thereto. A concentrate supply arrangement 112 is connected to the discharge arrangement 104 by one or more conduits 114 for supplying flavouring to the carbonated water. The chamber 100 contains a carbonating device which may be of conventional form e.g. a nozzle for injecting carbon dioxide into the water, or is preferably as described in our published British Patent Application No. 2,161,089 (& EP-A-16 65 86). The water supply arrangement and concentrate supply arrangement may also be as described in that published British patent application.

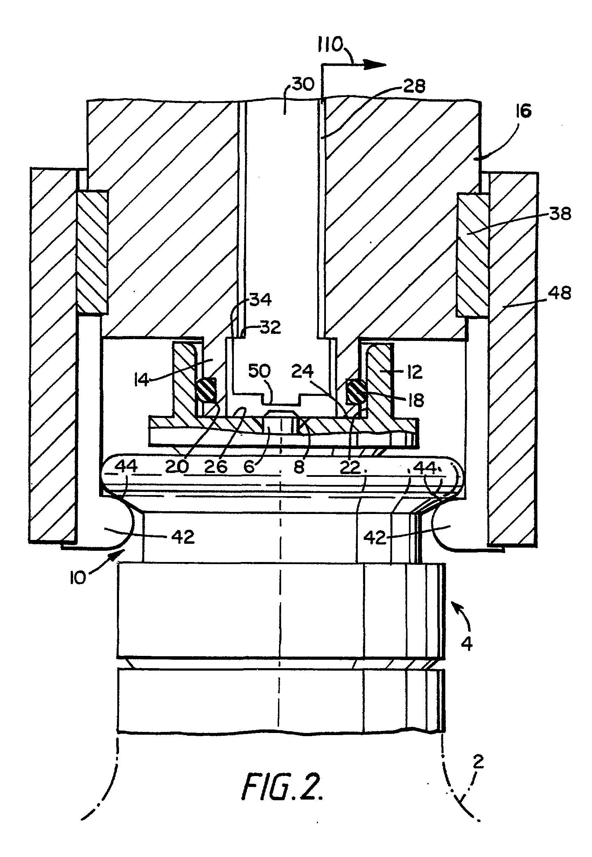

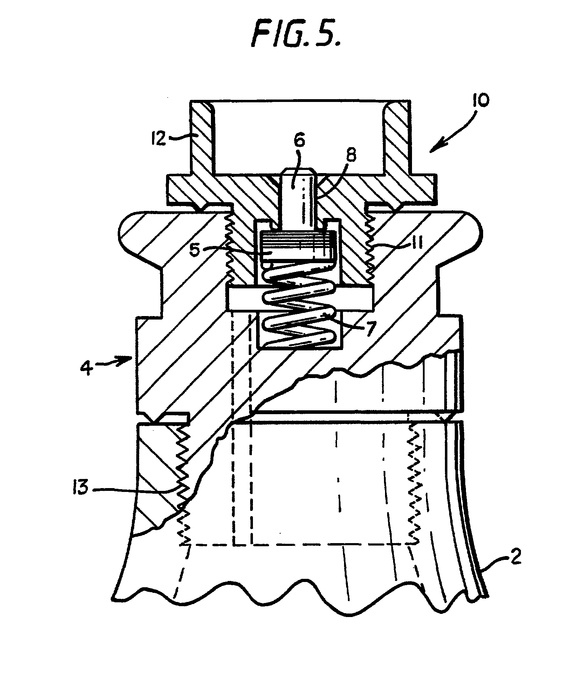

With reference to Figures 2 to 5, the carbon dioxide supply arrangement 108 includes a pressurised carbon dioxide bottle 2 provided at its top with a valve housing 4 containing a valve 5 (Fig. 5 only) which is normally closed by a compression spring 7 (Fig. 5 only) but which can be opened by depressing an axially movable valve operating rod 6 which extends through a passage 8 in a connector part 10 which is secured to the valve housing 4 by threads 11 (Fig. 5 only). The connector part 10 includes a cylindrical female element 12 which receives a cooperating male element 14 of a second connector part 16 which is a permanent part of the home carbonation apparatus.

The male element 14 carries an external O-ring 18 in a groove 20, the O-ring forming a gas seal with the internal cylindrical surface 22 of the female element 12. When the connector parts 10 and 16 are fully locked together, an end surface 24 of the male element 14 abuts the bottom surface 26 of the female element 12. Surfaces 24 and 26 thus form a positive stop.

The second connector part 16 includes a gas passage 28 which contains a plunger 30. Inter-engaging shoulders 32 and 34 are provided on the plunger 30 and in the gas passage 28 respectively to define the retracted position of the plunger 30 as shown in Figure 2. Passage 28 communicates with conduit 110 as shown diagrammatically in Figure 2.

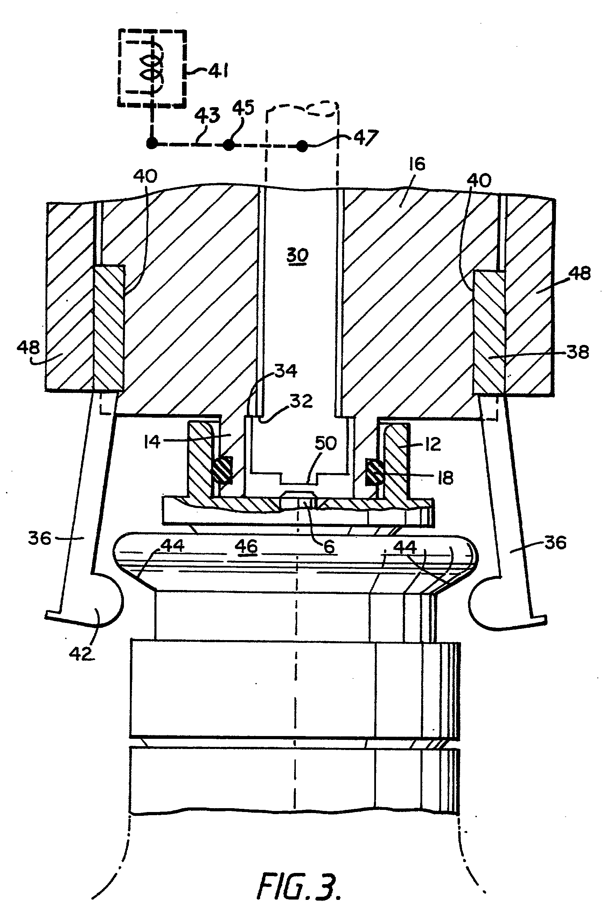

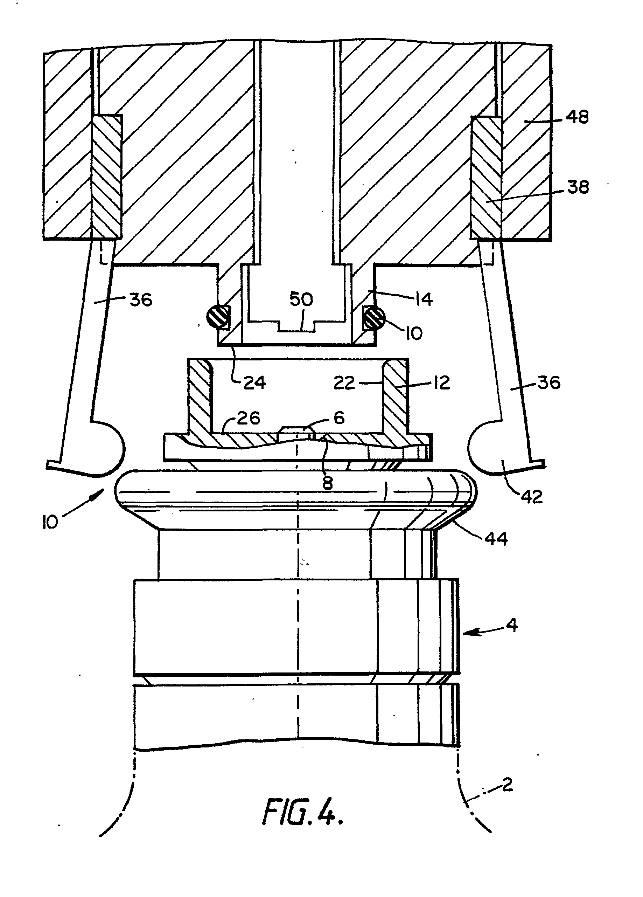

A number of locking fingers 36 (for example three fingers) of resilient material, preferably synthetic plastics, are carried by the second connector part 16 by means of a ring 38 with which the fingers are integral and which is mounted in a groove 40 in the connector part 16. The ring 38 may be split so that it may be easily assembled with the connector part 16. The fingers 36 are formed so that in their unstressed condition they assume the position shown in Figures 3 and 4. Each finger is provided at its lower end with an inwardly directed projection 42 which, when the two parts 10 and 16 are locked together as shown in Figure 2, engages an inclined surface 44 provided at the lower side of a locking rim 46 of the valve housing 4. An axially slidable collet 48 is provided on the second connector part 16 for holding the fingers 36 in the position shown in Figure 2 in which the two parts are locked together. The inclined surface 44 is such as to draw the connector parts together as the fingers 36 are moved inwardly.

When the two parts are in the locked position shown in Figure 2, and the plunger 30 is not actuated, an end protrusion 50 of the plunger 30 which is adapted to engage the valve operating rod 6 is precisely positioned a predetermined distance above the surface 26, by virtue of the engagement between the shoulders 32 and 34 and between the surfaces 24 and 26, and is therefore precisely positioned in relation to the upper end of the valve rod 6. When gas is to be discharged from the bottle 2, the plunger 30 is actuated so as to move downwardly as shown in Figure 2 into engagement with the rod 6 so as to press the rod 6 downwardly also. This is achieved by means diagrammatically shown in Figure 3 comprising a solenoid 41 connected to one end of a lever 43 whose other end 47 is connected to the plunger 30, the lever being pivoted at a point 45 between its ends. Thus, energisation of the solenoid 41 opens the valve and permits carbon dioxide gas to travel upwardly through the passage 8 and the passage 28, to be used for carbonating water. Further, since the O-ring 18 seals against the internal surface of the female element 12, there is no risk of damage to that internal surface so that a good seal may be always assured.

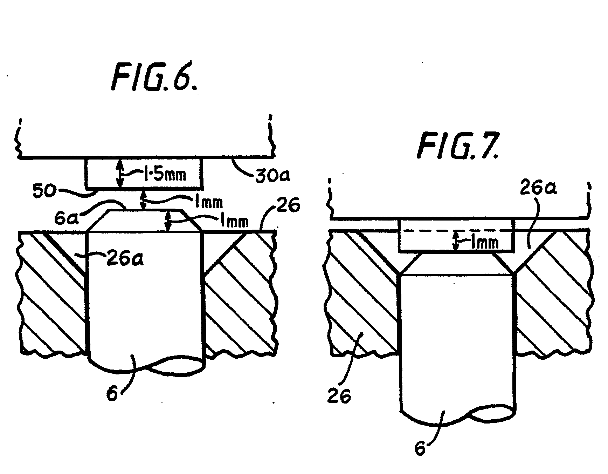

With reference to Figure 6, when the connector is in the condition shown in Figure 2 i.e. the plunger 30 is not actuated, the surface 50 is preferably positioned about 2mm above the surface 26 and the valve rod 6 is arranged so that when the valve is closed the top surface 6a of the valve rod 6 projects about 1mm above the surface 26 so that there is a spacing of about 1mm between the surface 6a and the surface 50. Preferably the stroke of the actuator 30, when the aforesaid solenoid is actuated, is sufficient to force the rod 6 downwardly into a recess 26a in the surface 26. This stroke may, for example, be about 3mm. The distance between the surface 50 and a shoulder 30a on the actuator 30 may be about 1.5 mm so that the shoulder 30a does not quite contact the surface 26 when the valve is fully opened. These dimensions have been found to be particularly advantageous but of course it is possible to depart from them within the scope of the invention. However, where the actuator 30 is arranged with dimensions as described, the top surface 6a of the rod 6 should not project more than 2mm above the surface 26 when the valve is fully closed. It may be approximately flush with the surface 26 when the valve is fully closed or may even be slightly below the surface 26 when the valve is fully closed. Thus, the precise positioning of the actuator 30 in relation to the surface 26 achieved by the invention assures reliable actuation of the valve 5 at all times.

If the bottle is to be disconnected, the collet 48 is slid upwardly from the position shown in Figure 2 to that shown in Figure 3. This permits the fingers 36 to move outwardly under their own resilience to the position shown in Figure 3 and thereafter the connector part 10 may be separated from the connector part 16 by drawing the bottle downwardly as shown in Figure 4. Thus, when the carbon dioxide in the bottle 2 has been used up, a fresh bottle may be easily installed.

Various modificiations are possible within the scope of the invention. For example, although it is particularly advantageous to use the surfaces 24 and 26 as a positive stop limiting the movement of the male connector part 14 into the female connector part 12, other positive stop means could be provided. For example, an inward projection such as a circumferential rib could be provided inside the cylindrical surface 22 near to the bottom to serve the purpose of a stop by cooperation with the end surface 24 of the element 14.

## Claims

1. Carbonation apparatus for use with a carbon dioxide supply vessel (2) having a connector part (10) which comprises a female member (12) having an internal space defined by an internal cylindrical surface, a stop surface (26) located within said female member (12), an inclined external locking surface (44), a passage (8) which has a cross-section narrower than and which at one end communicates with the interior of the female member and a valve (5) which normally closes said passage (8) but which is openable to put the passage (8) in communication with the interior of the vessel (2); the carbonation apparatus (100) comprising:
a carbonation chamber;
a conduit (28) for supplying carbon dioxide to said chamber; and
a further connector part (16) for detachably interconnecting the carbonation apparatus (100) with the connector part (10) of the carbon dioxide supply vessel (9); said further connector part (16) comprising a male member (14) which has a hollow interior in communication with said conduit (28) and which is adapted to be slidably inserted into the female member (12), the end (24) of the male member (14) being adapted to engage said stop surface (26) to positively define the position of the male member (14) relative to the female member (12) when fully inserted therein; a sealing member (18) on the outside of the male member (14) and adapted to cooperate with said cylindrical surface of said female member (12) to form a gas tight seal therewith; a valve actuator (30) positioned in the hollow interior of the male member (14) and adapted to be axially movable for opening the valve (5) of the connector part (10) of the vessel (2); resilient locking fingers (36) positioned outwardly of the male member (14) and projecting beyond the end thereof, each said finger (36) having an inwardly directed projection (42) adapted to engage said locking surface (44) of said connector part (4) of said vessel (2); and means (48) for moving the locking fingers (36) inwardly to a locking position and holding them in said locking position so that the engagement between the locking surface (44) and the locking fingers (36) may draw said male member (14) into said female member (12) and hold said male member (14) in said defined position therein.

2. Apparatus according to claim 1, including stop means (32, 34) defining a retracted position of said actuator.

3. A connector part (10) for a carbon dioxide supply vessel (2) for detachably connecting the vessel to a carbonation apparatus according to claim 1 or 2, said connector part (10) comprising:
a female member (12) having an internal space open at one end to receive the male member (14), said internal space being defined by an internal cylindrical surface adapted to cooperate with the sealing member (18) on the male member (14) to form a gas tight seal therewith;
an external locking surface (44) which is adapted to be engaged by said inwardly directed projections (42) of said locking fingers (36) of said apparatus when said locking fingers (36) are moved inwardly, said locking surface being inclined to face outwardly and away from said one end of said female member (12) such that inward movement of said locking fingers (36) draws said male member (14) into said female member (12);
a stop (26) located within said female member (12) and adapted to cooperate with the end (24) of the male member (14) to form a positive stop which defines the position of the male member (14) within the female member (12) when said locking fingers (36) are in their locking position;
a passage (8) which has a cross-section narrower than and which at one end communicates with the interior of the female member (12); and a valve (5) for closing said passage (8), said valve being normally closed and being openable by axial movement of said valve actuator (30) to place the interior of the supply vessel (2) in communication with said conduit (28) via said passage (8) and said male and female members (14, 12).

4. A connector part according to claim 3, wherein said stop surface (26) is constituted by an end surface of said internal space of said female member (12).

5. A connector part according to claim 3, wherein said stop surface is provided by a radial projection or rib inside said internal space of said female member (12).

6. A connector part according to claim 3, wherein said one end of said passage (8) comprises a divergent conical recess (26a) in an end surface (26) of said female member (12).

7. A connector part according to any of claims 3 to 6, wherein said locking surface (44) is frustoconical.

8. A connector part according to any of claims 3 to 7, in which said valve (5) comprises a stem (6) located in said passage (8).

9. A connector part according to any of claims 3 to 7, in combination with a carbon dioxide supply vessel to which said connector part is secured.

10. The combination of carbonation apparatus according to claim 1 or 2 and a connector part according to any of claims 3 to 8.

## Patentansprüche

1. Einrichtung zum Versetzen mit Kohlensäure zur Verwendung zusammen mit einem Kohlendioxid-Zufuhrbehälter (2), der ein Verbindungsteil (10) aufweist, das ein Mutterteil (12) mit einem Innenraum aufweist, der von einer zylindrischen Innenfläche begrenzt wird, mit einer Anschlagfläche (26), die innerhalb des Mutterteils (12) angeordnet ist, einer geneigten äußeren Sperrfläche (44), einem Kanal (8), der einen Querschnitt aufweist, der enger ist als das Innere des Mutterteils und am einen Ende mit diesem zusammenwirkt, und einem Ventil (5), das normalerweise den Kanal (8) verschließt, aber öffenbar ist, um den Kanal (8) in Verbindung mit dem Inneren des Behälters (2) zu bringen, wobei die Einrichtung zum Versetzen mit Kohlensäure die folgenden Merkmale aufweist:
ein Kammer (100) zum Versetzen mit Kohlensäure, eine Leitung (28) zum Zuführen von Kohlendioxid zur Kammer, und ein weiteres Verbindungsteil (16) zur lösbaren gegenseitigen Verbindung der Einrichtung zum Versetzen mit Kohlensäure mit dem Verbindungsteil (10) des Kohlendioxid-Zufuhrbehälters (2), wobei das weitere Verbindungsteil (16) ein Vaterteil (14) aufweist, das ein hohles Inneres aufweist, das in Verbindung mit der Leitung (28) steht, und das dazu eingerichtet ist, verschieblich in das Mutterteil (12) eingeführt zu werden, wobei das Ende (24) des Vaterteils (14) zum Eingriff in die Anschlagfläche (26) eingerichtet ist, um wirksam die Lage des Vaterteils (14) relativ zum Mutterteil (12) festzulegen, wenn es voll in dieses eingeführt ist; ein Dichtungsteil (18) an der Außenseite des Vaterteils (14), das dazu eingerichtet ist, mit der zylindrischen Fläche des Mutterteils (12) zur Bildung einer gasdichten Abdichtung hiermit zusammenzuwirken; eine Ventil-Betätigungseinrichtung (30), die im hohlen Inneren des Vaterteils (14) angeordnet ist und dazu eingerichtet ist, zum Öffnen des Ventils (5) des Verbindungsteils (10) des Behälters (2) axial beweglich zu sein; federnde Sperrfinger (36), die außerhalb des Vaterteils (14) angeordnet sind und über dessen Ende hinaus vorspringen, wobei jeder Finger (36) einen einwärts gerichteten Vorsprung (42) aufweist, der dazu eingerichtet ist, mit der Sperrfläche (44) des Verbindungsteils (4) des Behälters (2) in Eingriff zu gelangen; und eine Einrichtung (48) zum Bewegen der Sperrfinger (36) nach innen in eine Sperrlage und zum Halten dieser in der Sperrlage, so daß der Eingriff zwischen der Sperrfläche (44) und den Sperrfingern (36) das Vaterteil (14) in das Mutterteil (12) hineinzieht und das Vaterteil (14) in der festgelegten Lage hierin halten kann.

2. Einrichtung nach Anspruch 1, mit einer Anschlageinrichtung (32, 34), die eine eingefahrene Lage der Betätigungseinrichtung festlegt.

3. Verbindungsteil (10) für einen Kohlendioxid-Zufuhrbehälter (2) zum abnehmbaren Anschluß des Behälters an eine Einrichtung zum Versetzen mit Kohlensäure nach Anspruch 1 oder 2, wobei das Verbindungsteil (10) die folgenden Teile aufweist:
ein Mutterteil (12) mit einem Innenraum, der am einen Ende zur Aufnahme des Vaterteils (14) offen ist, wobei der Innenraum von einer zylindrischen Innenfläche begrenzt wird, die zur Zusammenwirkung mit dem Dichtungsteil (18) am Vaterteil (14) eingerichtet ist, um hiermit eine gasdichte Abdichtung zu bilden, eine äußere Sperrfläche (44), die zum Eingriff mit den einwärts gerichteten Vorsprüngen (42) der Sperrfinger (36) der Einrichtung eingerichtet ist, wenn die Sperrfinger (36) einwärts bewegt werden, wobei die Sperrfläche nach außen weist und von dem einen Ende des Mutterteils (12) weg so geneigt ist, daß die Einwärtsbewegung der Sperrfinger (36) das Vaterteil (14) in das Mutterteil (12) hineinzieht, ein Anschlag (26), der innerhalb des Mutterteils (12) angeordnet und zur Zusammenwirkung mit dem Ende (24) des Vaterteils (14) eingerichtet ist, um einen wirksamen Anschlag zu bilden, der die Lage des Vaterteils (14) innerhalb des Mutterteils (12) festlegt, wenn die Sperrfinger (36) sich in ihrer Sperrlage befinden, ein Kanal (8), der einen Querschnitt aufweist, der enger ist als das Innere des Mutterteils (12) und mit dem einen Ende hiermit in Verbindung steht, und ein Ventil (5) zum Versperren des Kanals (8), wobei das Ventil normalerweise geschlossen ist und durch die Axialbewegung der Ventil-Betätigungseinrichtung (30) offenbar ist, um das Innere des Zufuhrbehälters (2) über den Kanal (8), das Vaterteil und das Mutterteil (14, 12) in Verbindung mit der Leitung (28) zu bringen.

4. Verbindungsteil nach Anspruch 3, worin die Anschlagfläche (26) von einer Endfläche des Innenraums des Mutterteils (12) gebildet ist.

5. Verbindungsteil nach Anspruch 3, worin die Anschlagfläche von einem radialen Vorsprung oder einer Rippe im Inneren des Innenraums des Mutterteils (12) vorgesehen ist.

6. Verbindungsteil nach Anspruch 3, worin das eine Ende des Kanals (8) eine divergierende konische Aussparung (26a) in einer Endfläche (26) des Mutterteils (12) aufweist.

7. Verbindungsteil nach jedem der Ansprüche 3 bis 6, worin die Sperrfläche (44) kegelstumpfförmig ist.

8. Verbindungsteil nach jedem der Ansprüche 3 bis 7, worin das Ventil (5) einen Schaft (6) umfaßt, der im Kanal (8) angeordnet ist.

9. Verbindungsteil nach jedem der Ansprüche 3 bis 7, in Kombination mit einem Kohlendioxid-Zufuhrbehälter, an welchem das Verbindungsteil befestigt ist.

10. Kombination aus einer Einrichtung zum Beaufschlagen mit Kohlensäure nach Anspruch 1 oder 2 und einem Verbindungsteil nach jedem der Ansprüche 3 bis 8.

**Revendications**

1°) Dispositif de gazéification destiné à être utilisé avec un récipient d'alimentation en gaz carbonique (2) comportant une partie de connecteur (10) comprenant un élément femelle (12) présentant un espace intérieur défini par une surface cylindrique intérieure, une surface de butée (26) située à l'intérieur de l'élément femelle (12), une surface de verrouillage extérieure inclinée (44), un passage (8) présentant une section transversale plus étroite que l'intérieur de l'élément femelle et communiquant, par une extrémité, avec l'intérieur de cet élément femelle, et une soupape (5) fermant normalement le passage (8) mais pouvant être ouverte pour mettre le passage (8) en communication avec l'intérieur du récipient (2) ; dispositif de gazéification caractérisé en ce qu'il comprend :
- une chambre de gazéification (100) ;
- un conduit (28) destiné à fournir le gaz carbonique à cette chambre ; et
- une autre partie de connecteur (16) destinée à relier de façon démontable le dispositif de gazéification (100) à la partie de connecteur (10) du récipient d'alimentation en gaz carbonique (2) ;
- cette autre partie de connecteur (16) comprenant un élément mâle (14) présentant un intérieur creux en communication avec le conduit (28) et destiné à s'introduire en glissement dans l'élément femelle (12), l'extrémité (24) de l'élément mâle (14) étant conçue pour s'engager contre la surface de butée (26) de manière à définir avec précision la position de l'élément mâle (14) par rapport à l'élément femelle (12) lorsqu'il est complètement introduit dans celuici ; un élément d'étanchéité (18) placé sur l'extérieur de l'élément mâle (14) et destiné à coopérer avec la surface cylindrique de l'élément femelle (12) pour former, avec celle-ci, un joint d'étanchéité de gaz ; un organe de manœuvre de soupape (30) placé dans l'intérieur creux de l'élément mâle (14) et destiné à se déplacer axialement pour ouvrir la soupape (5) de la partie de connecteur (10) du récipient (2) ; des doigts de verrouillage élastiques (36) placés à l'extérieur de l'élément mâle (14) et dépassant au-delà de l'extrémité de celui-ci, chaque doigt (36) comportant une projection dirigée vers l'intérieur (42) destinée à s'engager contre la surface de verrouillage (44) de la partie de connecteur (4) du récipient (2) ; et des moyens (48) destinés à déplacer les doigts de verrouillage (36) vers l'intérieur pour les amener et les maintenir dans une position de verrouillage de façon que l'engagement entre la surface de verrouillage (44) et les doigts de verrouillage (36) puisse tirer l'élément mâle (14) dans l'élément femelle (12) et maintenir cet élément mâle (14) dans la position ainsi définie dans l'élément femelle.

2°) Dispositif selon la revendication 1, caractérisé en ce qu'il comprend des moyens de butée (32, 34) définissant une position rétractée de l'organe de manœuvre.

3°) Partie de connecteur (10) pour un récipient d'alimentation en gaz carbonique (2), destinée à relier de façon démontable le récipient à un dispositif de gazéification (100) selon l'une quelconque des revendications 1 et 2, partie de connecteur (10) caractérisée en ce qu'elle comprend :
- un élément femelle (12) comportant un espace intérieur ouvert à une extrémité pour recevoir l'élément mâle (14), cet espace intérieur étant défini par une surface cylindrique intérieure destinée à coopérer avec l'élément d'étanchéité (18) monté sur l'élément mâle (14) pour former, avec celui-ci, un joint d'étanchéité de gaz ;
- une surface de verrouillage extérieure (44) destinée à venir s'engager contre des projections dirigées vers l'intérieur (42) des doigts de verrouillage (36) du dispositif lorsque ces doigts de verrouillage (36) sont déplacés vers l'intérieur, la surface de verrouillage étant inclinée de manière à être tournée vers l'extérieur en s'écartant de l'extrémité de l'élément femelle (12) de façon que le mouvement vers l'intérieur es doigts de verrouillage (36) tire l'élément mâle (14) dans l'élément femelle (12) ;
- une butée (26) placée à l'intérieur de l'élément femelle (12) et destinée à coopérer avec l'extrémité (24) de l'élément mâle (14) pour former une butée positive définissant la position de l'élément mâle (14) à l'intérieur de l'élément femelle (12) lorsque les doigts de verrouillage (36) sont dans leur position de verrouillage ;
- un passage (8) présentant une section transversale plus étroite que l'intérieur de l'élément femelle (12) et communiquant, par une extrémité, avec l'intérieur de cet élément femelle ; et
- une soupape (5) destinée à ferme le passage (8), cette soupape étant normalement fermée et pouvant être ouverte par le mouvement axial de l'organe de manœuvre de soupape (30) pour placer l'intérieur du récipient d'alimentation (2) en communication avec le conduit (28) par le passage (8) et les éléments mâle et femelle (14, 12).

4°) Partie de connecteur selon la revendication 3, caractérisée en ce que la surface de butée (26) est constituée par une surface d'extrémité de l'espace intérieur de l'élément femelle (12).

5°) Partie de connecteur selon la revendication 3, caractérisée en ce que la surface de butée est formée par une projection ou nervure radiale à l'intérieur de l'espace intérieur de l'élément femelle (12).

6°) Partie de connecteur selon la revendication 3, caractérisée en ce que la première extrémité du passage (8) comprend une cavité conique divergente (26a) dans une surface d'extrémité (26) de l'élément femelle (12).

7°) Partie de connecteur selon l'une quelconque des revendications 3 à 6, caractérisée en ce que la surface de verrouillage (44) est tronconique.

8°) Partie de connecteur selon l'une quelconque des revendications 3 à 7, caractérisée en ce que la soupape (5) comprend une tige (6) placée dans le passage (8).

9°) Partie de connecteur selon l'une quelconque des revendications 3 à 7, caractérisée en ce qu'elle est utilisée en combinaison avec un récipient d'alimentation en gaz carbonique auquel est fixée la partie de connecteur.

10°) Combinaison d'un dispositif de gazéification selon l'une quelconque des revendications 1 et 2, avec une partie de connecteur selon l'une quelconque des revendications 3 à 8.

# FIG.1.

FIG.2.

FIG.3.

FIG.4.

# FIG.5.

FIG.6.

FIG.7.